# EUROPÄISCHE PATENTSCHRIFT

(11) **EP 1 575 805 B1**
(45) Veröffentlichungstag und Bekanntmachung des Hinweises auf die Patenterteilung: **18.10.2006**
(21) Anmeldenummer: 03775061.9
(22) Anmeldetag: 10.10.2003
(51) Int. Cl.: B60R 16/02

(54) **SIGNALÜBERTRAGUNG BEI AN EINEM CHASSIS BEWEGBAR ANGEORDNETEN SITZEN**
SIGNAL TRANSMISSION FOR SEATS MOVABLY DISPOSED ON A CHASSIS
TRANSMISSION DE SIGNAUX POUR DES SIEGES LOGES MOBILES SUR UN CHASSIS

(30) Priorität: 07.12.2002 DE 10257273
(43) Veröffentlichungstag der Anmeldung: 21.09.2005
(73) Patentinhaber: ROBERT BOSCH GMBH, 70442 Stuttgart (DE)
(72) Erfinder: MATTES, Bernhard, 74343 Sachsenheim (DE); KAZMIERCZAK, Harald, 71717 Beilstein (DE)
(86) Internationale Anmeldenummer: PCT/DE2003/003380
(87) Internationale Veröffentlichungsnummer: WO 2004/052689

(56) Entgegenhaltungen:
- DE-C- 10 106 173
- DE-C- 19 743 313

## Beschreibung

Die Erfindung betrifft eine Anordnung zur Daten- und/oder Energieübertragung zwischen einem Chassis und einem an dem Chassis bewegbar angeordneten Sitz.

Für die Erhöhung der Sicherheit von Fahrzeuginsassen werden in die Sitze von Fahrzeugen zunehmend mehr Funktionen integriert, die chassisseitig elektronisch gesteuert und überwacht werden. Hierzu zählen neben der Überwachung und Ansteuerung von in den Sitzen integrierten Seiten-Airbags und Gurtstraffern, von Insassenklassifizierungssystemen, von Gurtschloßabfragen sowie Kindersitz- und Sitzeinbau-Erkennungen für das optimale Auslösen von Rückhaltesystemen.

Im Allgemeinen werden Daten/Signale in Fahrzeugen mittels Bussystemen über Kabel übertragen. Diese Art der Datenübertragung hat sich bewährt. Bei den Fahrzeugsitzen besteht jedoch das Problem, daß, wenn die Sitze auf Schienen bewegbar am Chassis des Fahrzeuges angebracht sind, die Kabel bei einer Bewegung des Sitzes nachgeführt werden müssen. Außerdem sollten die Kabel so verlegt werden, daß diese nicht beschädigt werden können und von ihnen keine Stolpergefahr für die Insassen des Fahrzeugs ausgeht. Ein weiteres Problem ergibt sich beim Ausbau der Sitze. Hierfür müssen, insbesondere bei Fahrzeugtypen wie zum Beispiel "Vans" oder "Sports Utility Vehicle" (SUV), deren Innenraum leicht veränderbar sein soll, die Kabelverbindung über eine leichtzugängliche Steckverbindung lösbar sein und die chassisseitig verbleibenden Kabel und Stecker im Fahrzeugboden verstaut werden.

Es ist bereits vorgeschlagen worden, Daten zwischen einem Chassis und einem Sitz kabellos mittels einem Übertrager (Transformator) zu übertragen, wobei die Ankopplung des Sitzes an das Chassis zur Datenübertragung über den Eisenkern des Übertragers erfolgt und die Primär- und Sekundärwicklung des Übertrages fest mit dem Chassis bzw. dem Sitz verbunden sind.

Für eine leichte Demontage des Sitzes wird der Eisenkern des Transformators zweiteilig ausgeführt. Eine Eisenkernhälfte ist in einer Führungsschiene und die andere Eisenkernhälfte an dem Sitz, der über einen Schlitten in der an dem Chassis angebrachten Führungsschiene gleitet, angeordnet. Die beiden Eisenkernhälften des Transformators sind nach der Montage des Sitzes auf dem Schlitten zur induktiven Daten- und/oder Energieübertragung zueinander positioniert, wobei bei einer Bewegung des Sitzes die eine Eisenkernhälfte mit dem Schlitten in der Führungsschiene gleiten kann.

Zur Verringerung der Bautiefe der Führungsschiene und für eine leichte und kostengünstige Montage wird vorgeschlagen, die Primärwicklung des Transformators als eine Leitung entlang der Führungsschiene auszubilden, wobei die Leitung auf einem Sockel in der Führungsschiene angebracht ist, so daß an dieser bei einer Bewegung des Sitzes die beiden Jochteile der an dem Schlitten angeordneten Eisenkernhälfte entlanggeführt werden können.

Aus DE 197 43 313, das die Merkmale des Oberbegriffs des Anspruch 1 zeigt, ist es bekannt, dass in einer Sitzführung in regelmäßigen Abständen rechteckförmige Übertragerhälften mit jeweils einer Primärwicklung fest eingebracht sind. Eine Übertragerhälfte mit einer Sekundärwicklung ist fest mit dem Sitz verbunden. Die Kontaktfläche der Übertragerhälfte mit der Sekundärwicklung zu einer Übertragerhälfte mit der Primärwicklung erstreckt sich in Bewegungsrichtung des Sitzes über mindestens die doppelte Länge, vorzugsweise über die dreifache Länge der Kontaktfläche einer Übertragerhälfte mit der Primärwicklung der Sitzführung. Auf diese Weise ist stets ein ausreichender Kontakt zwischen den Übertragerhälften der Sitzführung und der Übertragerhälfte des Sitzes gewährleistet.

Der Erfindung liegt die Aufgabe zugrunde, eine Anordnung zur Daten- und/oder Energieübertragung zwischen einem Chassis und einem an dem Chassis bewegbar angeordneten Sitz zu schaffen, die kostengünstig herstellbar und einfach zu handhaben ist und von der keine Gefahren für Insassen ausgehen.

Diese Aufgabe wird gemäß den Merkmalen des Patentanspruchs 1 gelöst.

Für eine geringe Bautiefe der Führungsschiene und eine leichte und kostengünstige Montage ist zumindest eine Primärwicklung des Transformators als ein in der Führungsschiene liegendes Kabel ausgeführt. Das Kabel durchläuft die in der Führungsschiene angeordneten Primär-Eisenkernhälften, wobei diese an der der Führungsschiene zugewandten Seite geschlossen ausgeführt sind. Dies ergibt mit der aufgesetzten Sekundär-Eisenkernhälfte einen geschlossenen Eisenkreis mit einem geringen Widerstand des magnetischen Flusses im Eisenkreis. Die Herstellung und die Montage der Führungsschiene werden einfacher.

Bei einer gerasteten Sitzverstellung werden die Primär-Eisenkernhälften entsprechend der Rasterschrittweite der Führungsschiene angeordnet.

Zur Vereinfachung der Montage der Anordnung werden die Primär-Eisenkernhälften in eine Kunststoffschiene eingebettet. Diese kann leicht in die Führungsschiene eingebracht werden und isoliert gleichzeitig die Primär-Eisenkernhälften untereinander und gegenüber der Führungsschiene.

Ist der Sitz mittels Schlitten, welche in der Führungsschiene gleiten, an dem Chassis bewegbar angeordnet, kann eine Verbindung zwischen einer Primär-Eisenkernhälfte und der Sekundär-Eisenkernhälfte über Zwischeneisenkerne in dem Schlitten erfolgen. Die Zwischeneisenkerne können hierbei in dem Schlitten federnd gelagert sein, wobei die Zwischeneisenkerne beim fixierten Sitz über die Sekundär-Eisenkernhälfte auf eine Primär-Eisenkernhälfte gedrückt werden und beim unfixierten Sitz zur Schlittenoberfläche, so daß ein ebene Schlittenoberfläche entsteht.

Um eine gute magnetische Kopplung der Eisenkernteile zu ermöglichen, ist an dem Schlitten eine Reinigungsvorrichtung angeordnet, die bei einer Bewegung des Schlittens an den Kontaktstellen der Primär-Eisenkernhälften befindliche Fremdkörper entfernt.

Zur Verbesserung der Zuverlässigkeit und der Bandbreite der Übertragungsanordnung können getrennte Primär- und/oder Sekundärwicklungen sowie separate Eisenkerne für die Daten- und/oder Energieübertragung verwendet werden.

Weiterbildungen der Erfindung ergeben sich aus den abhängigen Ansprüchen.

Die vorliegende Erfindung wird unter Bezug auf die beigefügten Zeichnungen näher erläutert, in denen zeigen:
Fig. 1a und 1b den in der Führungsschiene integrierten Teil der Daten- und Energieübertragungsanordnung gemäß einer Ausführung der Erfindung,
Fig. 2 eine Ausführungsform der Führungsschiene mit einem Schlitten gemäß der Erfindung,
Fig. 3a, 3b ein Beispiel für einen Mechanismus zum Zusammenfügen der Eisenkernteile gemäß der Erfindung,
Fig. 4 ein Beispiel für eine Reinigungsvorrichtung gemäß der Erfindung,
Fig. 5. einen Längsschnitt durch eine Ausführungsform der Führungsschiene gemäß der Erfindung und
Fig. 6 einen Teil eines Schlittens gemäß der Erfindung, der an die Ausführung der Führungsschiene von Fig. 5 angepaßt ist.

Gemäß der Erfindung erfolgt die Datenübertragung an der Schnittstelle zwischen dem Chassis und dem Sitz kabellos über eine induktive Verbindung mittels einem oder mehreren Übertragern. Der Sitz soll hierbei mittels einer Führungsschiene, die in den Boden eines Fahrzeuges eingelassen oder an diesem angeschraubt wird, stufenlos oder rastend bewegbar sein. Zur induktiven Daten- und/oder Energieübertragung ist bei der Arretierung des Sitzes zumindest eine am Sitz angebrachte Sekundär-Eisenkernhälfte zu einer in der Führungsschiene angeordneten Primär-Eisenkernhälfte positioniert.

Fig. 1a zeigt eine Führungsschiene 1 aus Aluminium für eine rastende Sitzverstellung in einem Ausschnitt. Die Positionierungsschrittweite des Sitzes wird in diesem Beispiel durch den Abstand 1 der Rastlöcher 2 in der Führungsschiene 1, in die die Rastbolzen 3 eingreifen, bestimmt. Gemäß der Erfindung werden in der Führungsschiene 1 mehrere Primär-Eisenkernhälften 4 angeordnet. In dem in Fig. 1a gezeigten Beispiel sind die Primär-Eisenkernhälften 4 im Abstand 1 an den Stellen der Rastlöcher 2 angeordnet, da sich hier die größte Öffnung in der Führungsschiene 1 für das Einbringen der Sekundär-Eisenkernhälfte befindet. Ein Ausnahme bilden in diesem Beispiel diejenigen Stellen, an denen die Führungsschiene 1 mit Schrauben 5 am Chassis befestigt ist. Hier sind keine Primär-Eisenkernhälften 4 anbringbar.

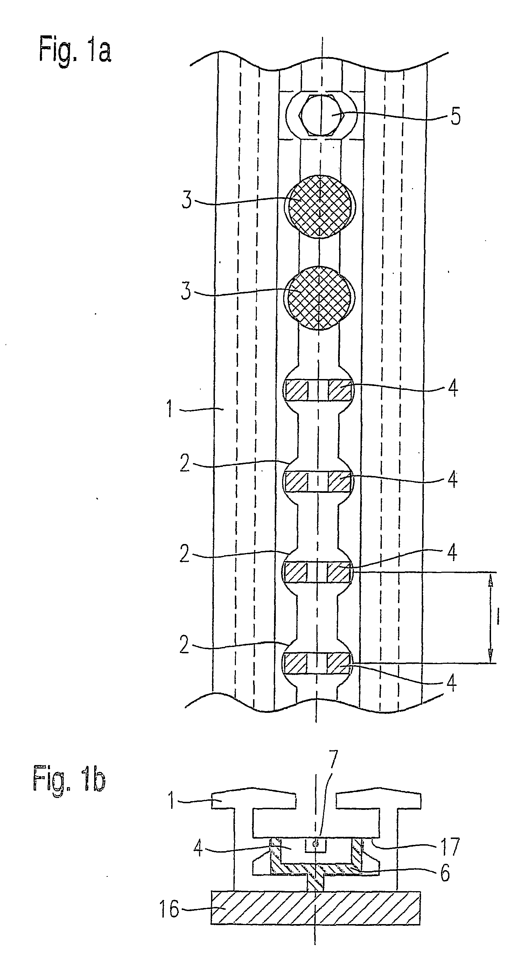

Fig. 1b zeigt die Führungsschiene 1 in einer Schnittdarstellung. Die Primären-Eisenkernhälften 4 sind für eine einfache Montage und zur Verringerung von Wirbelströmen in eine Kunststoffschiene 6 eingebettet, welche in die Führungsschiene 1 eingepreßt (Preßpassung) oder gesteckt wird. Das Kabel 7 ist ebenfalls in der Kunststoffschiene 6 geschützt eingebettet und durchläuft als Primärwicklung alle Primär-Eisenkernhälften 4.

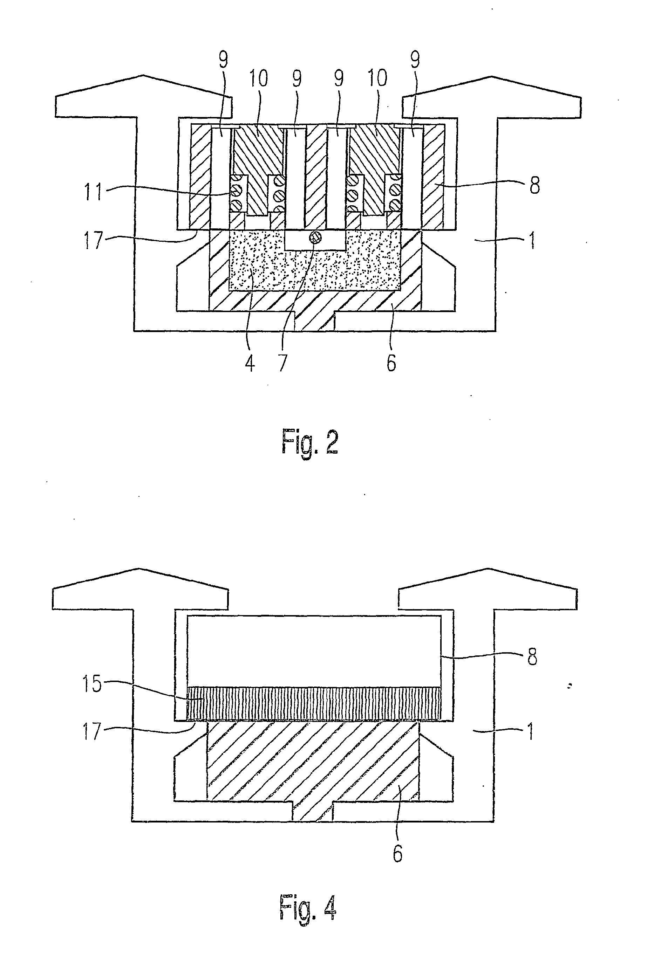

Im allgemeinen wird der Sitz nicht direkt mit der Führungsschiene 1 verbunden sondern über einen Schlitten, der in der Führungsschiene 1 gleitet. Fig. 2 zeigt die Führungsschiene 1 mit einem solchen Schlitten 8 gemäß einer Ausführung der Erfindung. Der Schlitten 8 gleitet hierbei auf den Schultern 17 der Führungsschiene 1 über die in die Führungsschiene 1 eingepreßte Kunststoffschiene 6 mit den Primär-Eisenkernhälften 4 und dem Kabel 7. Die magnetische Kopplung zwischen einer Primär-Eisenkernhälfte 4 und einer am Sitz angeordneten Sekundär-Eisenkernhälfte (nicht gezeigt) erfolgt über mit Kunststoffhülsen 9 isolierte Zwischeneisenkerne 10 im Schlitten 8. Die Zwischeneisenkerne 10 werden mittels Federn 11 an die Schlittenoberseite gedrückt.

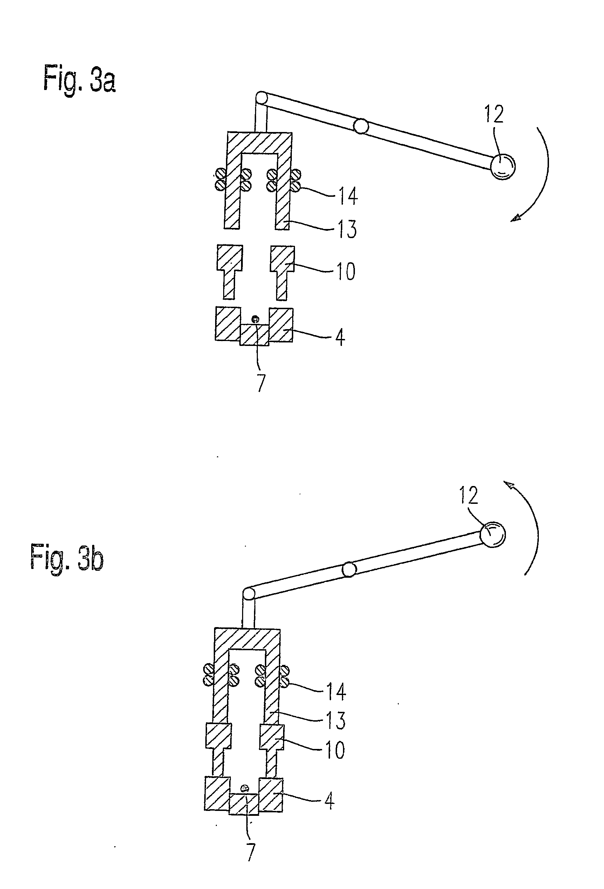

Ist der Sitz in Arretierposition, befinden sich die Zwischeneisenkerne 10 in dem Schlitten 8 über einer Primär-Eisenkernhälfte 4 in der Führungsschiene 1. Mittels einem in Fig. 3a und 3b beispielhaft gezeigten Hebelmechanismus 12, der vorteilhafterweise mit dem Betätigungsmechanismus der Rastbolzen 3 zur Arretierung des Sitzes verbunden sein kann, werden die Zwischeneisenkerne 10 über die die Sekundärwicklung 14 tragende Sekundär-Eisenkernhälfte 13 federnd auf die Primär-Eisenkernhälfte 4 gedrückt. Dies ermöglicht ein gute magnetische Ankopplung der Eisenkernteile ohne einen Luftspalt im Eisenkreis.

Ist der Sitz ausgebaut, wie in Fig. 2 gezeigt, drücken die Federn 11 die Zwischeneisenkerne 10 bündig an die Schlittenoberfläche, so daß an der Schlittenoberseite keine Vertiefungen entstehen, in denen sich Fremdkörper ansammeln könnten.

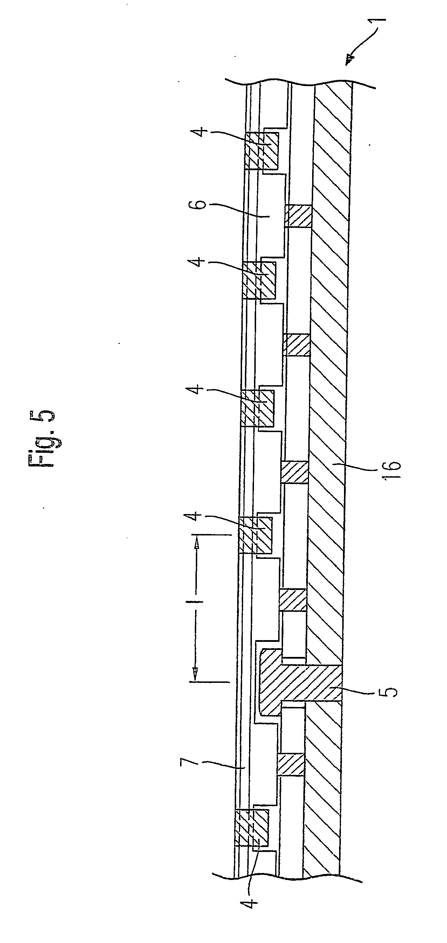

Da sich die Führungsschiene 1 unterhalb des Sitzes befindet, können leicht Fremdkörper durch ihre nach oben gerichtete Öffnung eindringen. Diese Fremdkörper können sich an der Oberfläche der Kunststoffschiene 6 über einer Primär-Eisenkernhälfte ablagern und einen guten Kontakt mit den Zwischeneisenkernen 10 verhindern. Gemäß der Erfindung sind hierfür, wie in Fig. 4 beispielhaft gezeigt, an der Vorder- und Rückseite des Schlittens 8 Reinigungsbürsten 15 angebracht, die bei einer Bewegung des Schlittens 8 in der Führungsschiene 1 Fremdkörper von den zu kontaktierenden Primär-Eisenkernhälften 4 entfernen. Die Reinigungsbürsten 15 können auch als von der Bewegung des Schlittens 8 angetriebene und entgegen der Schlittenbewegung rotierende Reinigungsbürsten 15 ausgeführt sein.

Zur Verbesserung der Reinigungswirkung weist die Kunststoffschiene 6 eine sehr glatte Oberfläche auf. Dies ermöglicht auch die Verwendung von Reinigungslippen an der Vorder- und Rückseite des Schlittens 8 (nicht gezeigt), welche bei einer Bewegung des Schlittens 8 in der Führungsschiene 1 Fremdkörper von den zu kontaktierenden Primär-Eisenkernhälften 4 abstreifen. Am Sitz selbst können ebenfalls Reinigungsbürsten, die die Schlittenoberseite beim Einführen des Sitze säubern, angebracht werden.

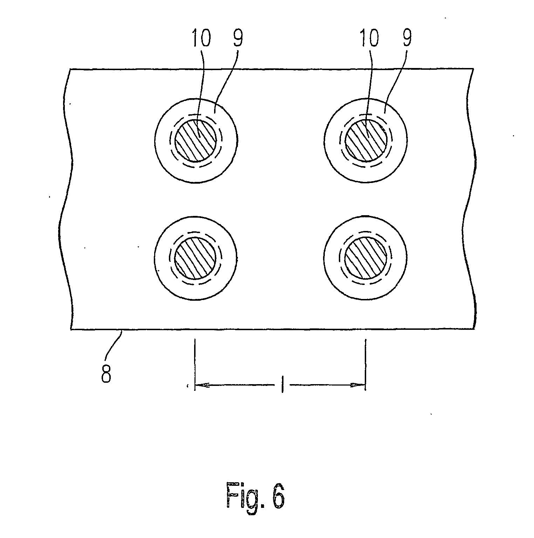

Fig. 5 zeigt einen Längsschnitt durch die an einem Chassis 16 mittels Schrauben 5 angebrachte Führungsschiene 1. Wegen der geringen Bautiefe der Führungsschiene 1 ist es in dieser Ausführung nicht möglich eine Primär-Eisenkernhälfte 4 an der Position der Schraube 5 anzubringen. Gemäß der Erfindung werden in diesem Fall, wie in Fig. 6 gezeigt, an dem Schlitten 8 zwei Paare der Zwischeneisenkernhälften 10 und sitzseitig entsprechend zwei Sekundär-Eisenkernhälften 13 (nicht gezeigt) mit dem Abstand 1 angeordnet. Somit ist gewährleistet, daß an jeder Sitzarretierungsposition zumindest ein Sekundär-Eisenkernhälfte über ein Zwischeneisenkernpaar an eine Primär-Eisenkernhälfte angekoppelt ist.

Bestehende Kabelverbindungen können leicht durch die erfindungsgemäße Anordnung ersetzt werden, ohne daß das Datenübertragungssystem des Fahrzeugs verändert werden muß.

Ist sitzseitig keine Energiequelle zu Speisung von Sensoren oder eines Verstärkers vorhanden, wird die benötigte Energie (z.B. 5 Watt) ebenfalls vom Chassis über die induktive Verbindung zum Sitz übertragen, wobei das zu übertragende Datensignal auf die Energieträgerwelle aufmoduliert werden kann. Für eine wechselseitige Datenübertragung zwischen dem Sitz und dem Chassis kann es von Vorteil sein, für die Daten- und Energieübertragung getrennte Primär- und/oder Sekundärwicklungen am Übertrager vorzusehen oder hierfür generell getrennte Übertrager zu verwenden.

Da Sitze meist mittels mehreren Führungsschienen 1 am Chassis 16 befestigt sind, können zur Erhöhung der Übertragungssicherheit diese ebenfalls mit Übertragungsanordnungen gemäß der Erfindung ausgerüstet werden. Eine solche Ausführung würde eine leichte Erkennung des Wechsels der Einbaurichtung eines Sitzes ermöglichen, da jede der Führungsschienen ihre individuelle Adresse senden könnte.

Es ist auch möglich, daß Informationen über die Sitzposition von einem Steuergerät im Sitz selbst ermittelt und dann an ein chassisseitiges Steuergerät übermittelt werden, das hieraus erkennt um welche Art von Sitz es sich handelt und wo und wie der Sitz eingebaut ist.

Durch Detektion der Impedanz und der Stromaufnahme der Übertager kann die Verbindung überwacht bzw. erkannt werden, ob ein Sitz eingebaut ist und/oder ob die magnetische Verbindung, z.B. durch Fremdkörper, gestört ist. Somit wird gemäß der Erfindung auf einfache Weise erkannt, wenn kein Sitz eingebaut ist. Eine bei leitungsgebundenen Übertragungssystemen zusätzlich erforderliche Sitzeinbauerkennung wird nicht benötigt.

Die erfindungsgemäße Anordnung mit ihrer induktiven Daten- und Energieübertragung stellt ein System mit hoher Funktionssicherheit dar. Bei schlechter oder zu geringer magnetischer Kopplung zwischen Primär- und Sekundärseite fällt immer zuerst die Energieübertragung aus. Die unversorgte Sekundärseite kann dann nicht mehr senden, was die Primärseite sofort erkennt und eine Fehleranzeige aktiviert. Eine gestörte Datenübertragung ist natürlich ebenfalls sofort diagnostizierbar. Somit erhält man ein System mit System hoher Funktionssicherheit.

Als Kernmaterialien eignen sich eisenverlustfreie Ferrite und das preßbare ferromagnetische Verbundmaterial "SOMALLOY", ein Eisenpulver in einer Plastikmasse, der Fa. Hoegen, Schweden.

Die Erfindung ist nicht auf die beschriebenen Beispiele beschränkt. So ist es auch möglich mehrere Primär- und/oder Sekundärwicklungen in der Führungsschiene bzw. an einer Sekundär-Eisenkernhälfte vorzusehen, um voneinander getrennte Übertragungswege zu schaffen, welche zur redundanten Ansteuerung und Überwachung von in den Sitzen integrierten Rückhaltesystemen aus sicherheitstechnischen Gründen notwendig sein können.

### Bezugszeichenliste

- 1: Führungsschiene,
- 2: Rastlöcher,
- 3: Rastbolzen,
- 4: Primär-Eisenkernhälfte,
- 5: Schraube,
- 6: Kunststoffschiene
- 7: Kabel,
- 8: Schlitten,
- 9: Kunststoffhülse,
- 10: Zwischeneisenkern,
- 11: Feder,
- 12: Hebel,
- 13: Sekundär-Eisenkernhälfte,
- 14: Sekundärwicklungen,
- 15: Reinigungsbürsten,
- 16: Chassis,
- 17: Schlittengleitschulter,
- 1: Rasterlänge.

## Patentansprüche

1. Anordnung zur Daten- und/oder Energieübertragung zwischen einem Chassis (16) und einem Sitz, wobei der Sitz mittels zumindest einer an dem Chassis (16) angebrachten Führungsschiene (1) an dem Chassis (16) bewegbar angeordnet ist, wobei
in der Führungsschiene (1) mehrere Primär-Eisenkernhälften (4), die zumindest eine Primärwicklung (7) tragen, fest angeordnet sind, und
an dem Sitz zumindest eine Sekundär-Eisenkernhälfte (13) mit zumindest einer Sekundärwicklung (14) angeordnet ist, wobei die Primär-Eisenkernhälften (4) in der Führungsschiene (1) so angeordnet sind, daß zur Daten- und/oder Energieübertragung zumindest eine Primär- und Sekundär-Eisenkernhälfte (4, 13) zueinander positioniert sind, **dadurch gekennzeichnet, daß** zumindest eine Primärwicklung (7) ein in der Führungsschiene (1) liegendes Kabel (7) ist, das durch alle Primär-Eisenkernhälften (4) läuft.

2. Anordnung nach Anspruch 1, **dadurch gekennzeichnet, daß** die Primär-Eisenkernhälften (4) entsprechend einer Rasterschrittweite (1) der Führungsschiene (1) angeordnet sind.

3. Anordnung nach einem der Ansprüche 1 bis 2, **dadurch gekennzeichnet, daß** die Primär-Eisenkernhälften (4) in einer Kunststoffschiene (6) in der Führungsschiene (1) eingebettet sind.

4. Anordnung nach einem der Ansprüche 1 bis 3, **dadurch gekennzeichnet, daß** der Sitz mittels zumindest einem Schlitten (8), der in der Führungsschiene (1) gleitet, an dem Chassis (16) bewegbar angeordnet ist, wobei zumindest eine Sekundär-Eisenkernhälfte (13) mit einer der mehreren Primär-Eisenkernhälften (4) über Zwischeneisenkerne (10) im Schlitten (8) verbindbar ist.

5. Anordnung nach Anspruch 4, **dadurch gekennzeichnet, daß** die Zwischeneisenkerne (10) in dem Schlitten (8) federnd gelagert sind, wobei die Zwischeneisenkerne (10) beim fixierten Sitz über die Sekundär-Eisenkernhälfte (13) auf eine Primär-Eisenkernhälfte (4) gedrückt werden und beim unfixierten Sitz sich zur Schlittenoberfläche bewegen, so daß eine ebene Schlittenoberfläche entsteht.

6. Anordnung nach Anspruch 4 oder 5 **dadurch gekennzeichnet, daß** an dem Schlitten (8) eine Reinigungsvorrichtung (15), die bei einer Bewegung des Schlittens (8) an den Kontaktstellen der Primär-Eisenkernhälften (4) befindliche Fremdkörper entfernt, angeordnet ist.

7. Anordnung nach einem der Ansprüche 1 bis 6 **dadurch gekennzeichnet, daß** an den Primär-Eisenkernhälften (4) zumindest eine Primärwicklung (7) zur Energieübertragung zur Datenübertragung vorgesehen ist.

8. Anordnung nach einem der Ansprüche 1 bis 7, **dadurch gekennzeichnet, daß** an den Sekundär-Eisenkernhälften (13) zumindest eine Sekundärwicklung (14) zur Datenübertragung und zur Energieübertragung vorgesehen ist.

9. Anordnung nach einem der Ansprüche 1 bis 7, **dadurch gekennzeichnet, daß** zumindest eine Sekundär-Eisenkernhälfte (13) zur Datenübertragung und zumindest eine Sekundär-Eisenkernhälfte (13) zur Energieübertragung vorgesehen sind, die getrennte Sekundärwicklungen (14) zur Daten- und Energieübertragung aufweisen.

## Claims

1. Arrangement for transmitting data and/or power between a chassis (16) and a seat, with the seat being arranged such that it can move on the chassis (16) by means of at least one guide rail (1) which is attached to the chassis (16), with
a plurality of primary iron-core halves (4), which have at least one primary winding (7), being firmly arranged in the guide rail (1), and
at least one secondary iron-core half (13) with at least one secondary winding (14) being arranged on the seat, with the primary iron-core halves (4) being arranged in the guide rail (1) in such a way that at least one primary iron-core half (4) and one secondary iron-core half (13) are positioned relative to one another for the purpose of transmitting data and/or power, **characterized in that** at least one primary winding (7) is a cable (7) which is situated in the guide rail (1) and runs through all of the primary iron-core halves (4).

2. Arrangement according to Claim 1, **characterized in that** the primary iron-core halves (4) are arranged in accordance with a grid step width (I) of the guide rail (1).

3. Arrangement according to either of Claims 1 and 2, **characterized in that** the primary iron-core halves (4) are embedded in a plastic rail (6) in the guide rail (1).

4. Arrangement according to one of Claims 1 to 3, **characterized in that** the seat is arranged such that it can move on the chassis (16) by means of at least one slide (8) which slides in the guide rail (1), it being possible to connect at least one secondary iron-core half (13) to one of the plurality of primary iron-core halves (4) via intermediate iron cores (10) in the slide (8).

5. Arrangement according to Claim 4, **characterized in that** the intermediate iron cores (10) are spring-mounted in the slide (8), with the intermediate iron cores (10) being pushed onto a primary iron-core half (4) by the secondary iron-core half (13) when the seat is fixed, and moving towards the slide surface when the seat is not fixed, so that a flat slide surface results.

6. Arrangement according to Claim 4 or 5, **characterized in that** a cleaning apparatus (15) is arranged on the slide (8), this cleaning apparatus removing foreign bodies from the contact points of the primary iron-core halves (4) when the slide (8) is moved.

7. Arrangement according to one of Claims 1 to 6, **characterized in that** at least one primary winding (7) is provided on the primary iron-core halves (4) in order to transmit power and data.

8. Arrangement according to one of Claims 1 to 7, **characterized in that** at least one secondary winding (14) is provided on the secondary iron-core halves (13) in order to transmit data and power.

9. Arrangement according to one of Claims 1 to 7, **characterized in that** at least one secondary iron-core half (13) is provided for transmitting data and at least one secondary iron-core half (13) is provided for transmitting power, these secondary iron-core halves having separate secondary windings (14) for transmitting data and power.

## Revendications

1. Dispositif de transmission de données et/ou d'énergie entre un châssis (16) et siège,
le siège étant mobile par rapport au châssis (16) par au moins un rail de guidage (1) porté par le châssis (16),
le rail de guidage (1) ayant plusieurs demi-noyaux de fer, primaires (4) portant au moins un enroulement primaire (7) et installés de manière fixe et le siège comporte au moins une moitié de noyau de fer secondaire (13) avec au moins un enroulement secondaire (14),
les moitiés de noyaux de fer, primaires étant installées dans le rail de guidage (1) pour qu'au moins une moitié de noyau de fer primaire et une moitié de noyau de fer secondaire (4, 13) soient positionnées l'une par rapport à l'autre pour transmettre des données et/ou de l'énergie,
**caractérisé en ce qu'**
au moins un enroulement primaire (7) est constitué par un câble (7) placé dans le rail de guidage (1), ce câble passant par toutes les moitiés de noyaux de fer primaires (4).

2. Dispositif selon la revendication 1,
**caractérisé en ce que**
les moitiés de noyau de fer primaires (4) sont réparties suivant un pas de trame (1) du rail de guidage (1).

3. Dispositif selon l'une des revendications 1 et 2,
**caractérisé en ce que**
les moitiés de noyau de fer primaires (4) sont intégrées dans un rail de matière plastique (6) du rail de guidage (1).

4. Dispositif selon l'une des revendications 1 à 3,
**caractérisé en ce que**
le siège est installé de manière mobile sur le châssis (16) par au moins un chariot (8) glissant dans le rail de guidage (1),
au moins une moitié de noyau de fer secondaire (13) étant reliée par l'une des moitiés de noyau de fer primaires (4) par des noyaux de fer intermédiaires (10) du chariot (8).

5. Dispositif selon la revendication 4,
**caractérisé en ce que**
les noyaux de fer intermédiaires (10) sont installés de manière élastique dans le chariot (8), ces noyaux de fer intermédiaires (10) étant poussés contre une moitié de noyau de fer primaire (4) par l'intermédiaire de la moitié de noyau de fer secondaire (13) lorsqu'on bloque et lorsqu'on débloque le siège, ces noyaux de fer se déplacent par rapport à la surface supérieure du chariot pour former une surface supérieure de chariot qui soit plane.

6. Dispositif selon l'une des revendications 4 ou 5,
**caractérisé en ce que**
le chariot (8) comporte un dispositif de nettoyage (15) qui élimine les corps étrangers se trouvant aux points de contact des moitiés de noyau de fer primaires (4) lorsqu'on déplace le chariot (8).

7. Dispositif selon l'une des revendications 1 à 6,
**caractérisé en ce que**
les moitiés de noyau de fer primaire (4) comportent au moins un enroulement primaire (7) pour transmettre l'énergie ou des données.

8. Dispositif selon l'une des revendications 1 à 7,
**caractérisé en ce que**
les moitiés de noyau de fer secondaire (13) comportent au moins un enroulement secondaire (14) pour transmettre les données et pour transmettre l'énergie.

9. Dispositif selon l'une des revendications 1 à 7,
**caractérisé en ce qu'**
au moins une moitié de noyau de fer secondaire (13) est prévue pour transmettre les données et au moins une moitié de noyau de fer (13) est prévue pour transmettre de l'énergie, ces moitiés ayant des enroulements secondaires distincts (14) pour transmettre les données et pour transmettre l'énergie.
